# DEMANDE DE BREVET EUROPEEN

(11) **EP 2 211 137 A1**
(43) Date de publication de la demande: **28.07.2010**
(21) Numéro de dépôt: 09179519.5
(22) Date de dépôt: 16.12.2009
(51) Int. Cl.: G01B 5/00, G01B 3/00

(54) **Procédé et dispositif de contrôle d'un tube**

(30) Priorité: 21.01.2009 FR 0950346; 21.01.2009 FR 0950347
(71) Demandeur: Peugeot Citroën Automobiles SA, 78140 Vélizy-Villacoublay (FR)
(72) Inventeur: Azou, Yvon, 94130 Nogent sur Marne (FR)
(74) Mandataire: Ménès, Catherine

(57) **Abrégé**

L'invention concerne un procédé de contrôle d'un tube présentant une première et une seconde extrémités, la seconde extrémité s'étendant le long d'un axe, **caractérisé en ce que** ce procédé comprend une étape a) de maintien (156) de la seconde extrémité à l'aide d'un mécanisme de maintien imposant une orientation prédéterminée de l'axe de la seconde extrémité permettant le raccordement de la seconde extrémité sur un embout tout en laissant, dans le même temps, la seconde extrémité libre en translation dans au moins une direction perpendiculaire à l'axe de la seconde extrémité, et une étape b) d'évaluation (162) de la conformité, par rapport à des tolérances prédéterminées, de la position de la seconde extrémité lorsque la première extrémité est fixée sur un porte-embout de référence.

## Description

La présente invention revendique les priorités des demandes françaises 0950346 et 0950347 déposées le 11 décembre 2008 dont les contenus (textes, dessins et revendications) sont ici incorporés par référence.

L'invention concerne un procédé et un dispositif de contrôle d'un tube présentant une première et une seconde extrémités, la seconde extrémité s'étendant le long d'un axe. L'invention a également pour objet un ensemble comportant ce dispositif de contrôle et le tube contrôlé.

Dans la suite de la description, à titre d'illustration, on considère que le tube contrôlé est un tube haute-pression d'un véhicule automobile. Par exemple, le tube haute pression est un tube d'amenée de gaz sous haute pression. Ce tube haute pression est destiné à être monté entre une rampe haute pression et un porte-injecteur de carburant du véhicule automobile. Ici, par haute pression on désigne une pression strictement supérieure à la pression atmosphérique et, de préférence, plusieurs fois supérieure à cette pression atmosphérique.

Il existe des procédés de contrôle d'un tube qui vérifie que la conformation de ce tube dans l'espace permet d'éviter un certain nombre d'obstacles lors de son montage dans le véhicule automobile. Pour cela, les première et seconde extrémités du tube sont fixées sans aucun degré de liberté à des porte-embouts de référence simulant la position réelle des embouts de la rampe haute pression et du porte-injecteur sur lesquels ces extrémités doivent être mécaniquement raccordées. La position des porte-embouts de référence est choisie pour correspondre à la position réelle des embouts auxquels les extrémités du tube haute pression sont destinées à être raccordées.

Dans ces procédés, des bagues ou des goulottes sont placées à proximité de points de passage prédéterminés. Ces bagues ou goulottes permettent de détecter que le tube passe effectivement par les points de passage. Si le tube ne passe pas par l'un de ces points de passage, alors cela signifie que la conformation dans l'espace de ce tube n'est pas conforme à ce qui est attendu. Si un tel tube non conforme était monté dans le véhicule automobile, il pourrait, par exemple, heurter l'un des obstacles présents dans le véhicule automobile lors de son montage.

Ces procédés connus ne permettent pas de vérifier la conformité de la position, avant raccordement, de la seconde extrémité par rapport à des tolérances prédéterminées, et si la longueur développée du tube contrôlé est comprise dans une plage prédéfinie de longueurs développées acceptables.

La longueur développée d'un tube est la longueur de sa fibre neutre. Dans le cas d'un tube, la fibre neutre est confondue avec l'âme centrale du tube. L'âme centrale du tube correspond à son axe de révolution dans les sections rectilignes du tube.

La conformité de la position est importante pour limiter les disparités de contraintes exercées par la seconde extrémité sur l'embout du porte-injecteur lorsqu'ils sont mécaniquement raccordés. En effet, une fois la première extrémité raccordée à la rampe haute pression, la seconde extrémité peut se retrouver dans une position, avant raccordement, plus ou moins éloignée de l'embout du porte-injecteur. Il faut donc, par exemple, tirer sur cette seconde extrémité pour venir la raccorder à l'embout du porte-injecteur. Une fois montée sur le porte-injecteur, la seconde extrémité exerce donc une contrainte sur l'embout du porte-injecteur qui tend à la ramener dans sa position avant raccordement. Cette contrainte joue sur différents phénomènes telles que la robustesse du raccord entre la seconde extrémité et l'embout du porte-injecteur. Il est souhaitable d'éviter, dans la mesure du possible, une dispersion trop importante de cette contrainte d'un tube à l'autre. Or, cette contrainte dépend fortement de la position, avant raccordement, de la seconde extrémité. Dès lors, il est important d'évaluer la conformité de la position, avant raccordement, de cette seconde extrémité par rapport à des tolérances prédéterminées.

Les procédés existants de contrôle ne permettent pas une telle évaluation car les première et seconde extrémités sont fixées sans aucun degré de liberté au porte-embout de référence.

L'invention vise donc à remédier à au moins l'un de ces inconvénients en proposant un procédé amélioré de contrôle d'un tube.

Elle a donc pour objet un procédé de contrôle d'un tube comprenant une étape a) de maintien de la seconde extrémité à l'aide d'un mécanisme de maintien imposant une orientation prédéterminée de l'axe de la seconde extrémité permettant le raccordement de la seconde extrémité sur un embout tout en laissant, dans le même temps, la seconde extrémité libre en translation dans au moins une direction perpendiculaire à l'axe de la seconde extrémité, et une étape b) d'évaluation de la conformité, par rapport à des tolérances prédéterminées, de la position de la seconde extrémité lorsque la première extrémité est fixée sur un porte-embout de référence.

Dans le procédé ci-dessus, le mécanisme de maintien permet de maintenir le tube dans une orientation susceptible de permettre le raccordement de la seconde extrémité à l'embout tout en conservant une liberté de déplacement en translation dans au moins une direction orthogonale. Dès lors, lorsque la première extrémité du tube est fixée sur le porte-embout de référence, cela entraîne un déplacement de la seconde extrémité le long de cette direction. La position de la seconde extrémité ainsi obtenue est représentative de la position, avant raccordement, de la seconde extrémité du tube lors de son montage dans le véhicule automobile. Cette position est donc également représentative de la contrainte subie par l'embout du porte-injecteur lorsque celui est raccordé à la seconde extrémité de ce tube. En évaluant la conformité de cette position obtenue, on peut détecter les tubes non-conformes. Il devient donc possible de trier les tubes en fonction de leur conformité et de réduire la dispersion des contraintes exercées sur l'embout du porte-injecteur d'un tube à l'autre ou de toute autre interface similaire.

Dans les cas extrêmes, si la position obtenue de la seconde extrémité est très largement en dehors des tolérances prédéterminées, le montage de la seconde extrémité sur l'embout peut s'avérer très difficile voire impossible. Ainsi, ce procédé permet également de détecter les tubes difficiles ou impossibles à monter.

Dans une variante, le procédé comprend avant l'étape a), une étape c) de fixation lâche de la première extrémité au porte-embout de référence de manière à permettre une rotation du tube autour de cette première extrémité, puis avant l'étape b), une étape d) de fixation rigide de la première extrémité au porte-embout de référence de manière à placer la première extrémité dans une position identique à celle rencontrée lorsque la première extrémité est raccordée à un embout d'un conduit. La fixation lâche de la première extrémité au porte-embout de référence, dans un premier temps, permet d'orienter l'axe de la seconde extrémité avec un minimum de contrainte et de déformation du tube.

De préférence, avant l'étape b), le procédé comprend une étape e) de verrouillage, sans aucun degré de liberté, de la seconde extrémité dans la position obtenue après l'étape d). Ce verrouillage rend l'évaluation de la conformité plus fiable puisque, lors de cette évaluation, les risques de déplacer accidentellement la seconde extrémité sont éliminés

Dans une variante, l'étape b) d'évaluation comprend la comparaison de la position obtenue de la seconde extrémité à une limite délimitant, d'un côté, des positions conformes de la seconde extrémité et, de l'autre côté, des positions non-conformes de la seconde extrémité.

Dans une variante, la comparaison est réalisée en déplaçant un embout le long de ladite direction jusqu'à une position de montage dans laquelle la seconde extrémité est mécaniquement raccordée à cet embout et l'indication d'une non-conformité si l'embout franchit la limite lors de son déplacement vers la position de montage. L'utilisation d'un embout déplaçable permet une évaluation fiable et simple de la conformité de la position de la seconde extrémité

L'invention a également pour objet un dispositif de contrôle du tube comprenant un mécanisme de maintien de la seconde extrémité apte à imposer une orientation prédéterminée de l'axe de la seconde extrémité permettant le raccordement de la seconde extrémité sur un embout tout en laissant, dans le même temps, la seconde extrémité libre en translation dans au moins une direction perpendiculaire à l'axe de la seconde extrémité, et un évaluateur de la conformité, par rapport à des tolérances prédéterminées, de la position de la seconde extrémité obtenue lorsque la première extrémité est fixée sur un porte-embout de référence.

L'invention sera mieux comprise à la lecture de la description qui va suivre, donnée uniquement à titre d'exemple non limitatif et faite en se référant aux dessins sur lesquels :
- la figure 1 est une illustration schématique d'un tube haute pression monté dans un véhicule automobile ;
- la figure 2 est une illustration schématique et en plan d'un dispositif de contrôle d'un tube permettant l'évaluation de la conformité de la position de la seconde extrémité par rapport à des tolérances prédéterminées ;
- la figure 3 est une illustration schématique d'une pince mise en oeuvre dans le dispositif de la figure 2 ;
- la figure 4 est une illustration schématique de la relation spatiale entre un embout déplaçable et la seconde extrémité du tube dans le dispositif de la figure 2 ;
- la figure 5 est une illustration schématique et en plan d'un dispositif de contrôle de la longueur développée d'un tube coudé ;
- la figure 6 est une illustration schématique et en perspective d'un gabarit droit utilisé dans le dispositif de la figure 5 ;
- la figure 7 est une illustration schématique en coupe d'un gabarit coudé du dispositif de la figure 5 ; et
- la figure 8 est un organigramme d'un procédé de contrôle d'un tube à l'aide des dispositifs des figures 2 et 5.

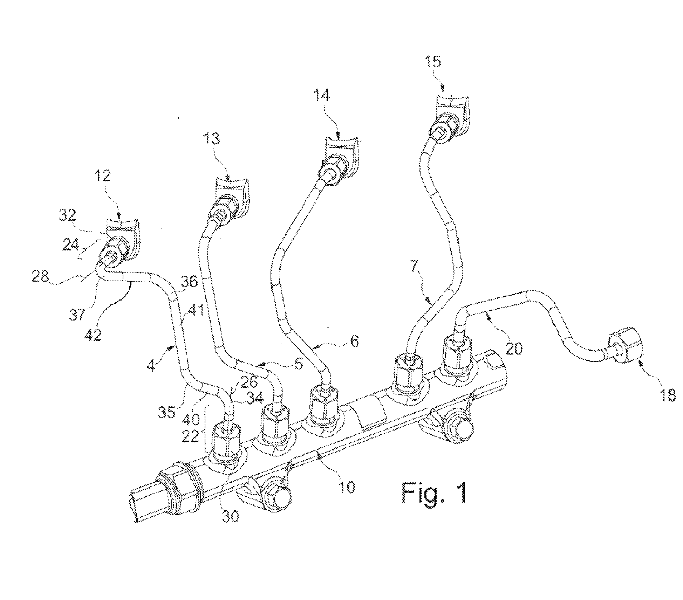

La figure 1 représente quatre tubes haute-pression 4 à 7 dans leur position montée dans un véhicule automobile tel qu'une voiture.

Dans leur position montée, chacun de ces tubes 4 à 7 raccorde une rampe haute pression 10 à des porte-injecteurs, respectivement, 12 à 15. Par exemple, les porte-injecteurs 12 à 15 supportent chacun un injecteur de carburant d'un moteur diesel. La rampe 10 est également raccordée par un raccord 18 à une pompe ici non représentée, par l'intermédiaire d'un tube haute pression 20 représenté dans sa position montée sur la figure 1

Chacun de ces tubes 4 à 7 et 20 est conformé de façon différente. Ici, chacun de ces tubes est formé de sections rectilignes raccordées les unes aux autres par l'intermédiaire de coudes. Typiquement, chaque tube présente au moins trois sections rectilignes dont deux sont coplanaires et la troisième s'étend dans un plan non coplanaire avec le plan défini par les deux premières sections rectilignes.

A l'exception de ces différences de conformation, ces tubes sont, par exemple, identiques. Ainsi, seul le tube 4 va maintenant être décrit en détail.

Le tube 4 présente une première extrémité 22 destinée à être raccordée à un embout de la rampe 10 et une seconde extrémité 24 destinée à être raccordée à un embout du porte-injecteur 12. Ces extrémités 22 et 24 s'étendent le long d'axes respectifs 26 et 28. Ainsi, chacune de ces extrémités forme une section rectiligne du tube 4.

Les extrémités 22 et 24 comportent, respectivement, des écrous de fixation 30 et 32. L'écrou 30 est vissé sur l'embout de la rampe 10 tandis que l'écrou 32 est vissé sur l'embout du porte-injecteur 12.

Ici, le tube 4 est conformé de manière à présenter quatre coudes 34 à 37 et trois sections rectilignes 40 à 42 entre les extrémités 22 et 24.

Le tube 4 est un tube rigide, c'est-à-dire qu'une contrainte exercée sur l'extrémité 22 est également ressentie au niveau de l'extrémité 24. Par exemple, le tube 4 est un tube en métal.

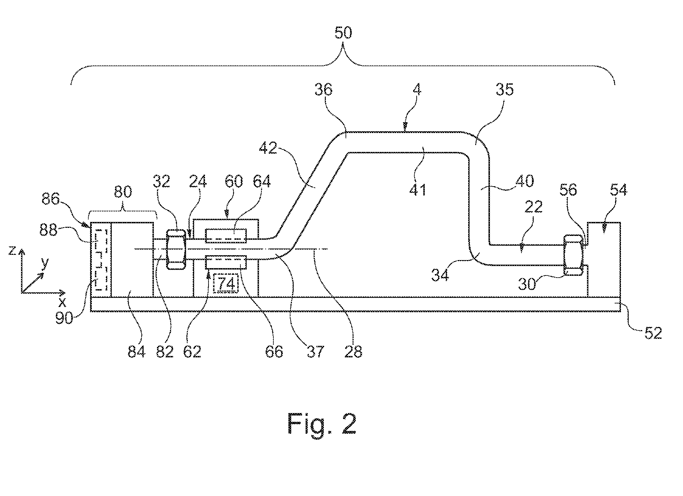

La figure 2 représente un dispositif 50 de contrôle du tube 4 permettant d'évaluer la conformité de la position de l'extrémité 24 par rapport à des tolérances prédéterminées.

Les tolérances prédéterminées définissent un ensemble de positions conformes pour la position de la seconde extrémité. Par exemple, les tolérances prédéterminées définissent un écart acceptable par rapport à une position de référence. De préférence, la position de référence correspond à une contrainte minimale de l'extrémité 24 sur l'embout du porte-injecteur 12. Si la position, avant raccordement, de l'extrémité 24 n'est pas dans cet ensemble de positions conformes, alors le tube est non-conforme.

A cet effet, le dispositif 50 comporte une table support 52 sur laquelle est fixé sans aucun degré de liberté un porte-embout 54 de référence. La table 52 s'étend dans un plan parallèle à des directions orthogonales X, Y d'un repère orthogonal. Ce repère orthogonal comprend également une direction Z qui s'étend perpendiculairement au plan de la table 52.

Le porte-embout 54 comporte un embout 56 identique à l'embout de la rampe 10 sur lequel se fixe l'extrémité 22. Ainsi, le porte-embout 54 permet de simuler l'interface de raccordement entre le tube 4 et la rampe 10.

De préférence, ce porte-embout 54 est réalisé dans une matière très dure pour qu'il soit robuste.

Un mécanisme 60 de maintien de l'extrémité 24 dans une orientation de raccordement est également fixé sur la table 52. On dit que l'extrémité 24 est dans l'orientation de raccordement lorsque l'axe 28 est parallèle à une direction permettant le raccordement de l'extrémité 24 sur l'embout du porte-injecteur 12. Cette direction est ici confondue avec la direction X.

Le mécanisme 60 est apte à placer et maintenir l'axe 28 parallèle à la direction X tout en permettant, en même temps, un déplacement en translation de l'extrémité 24 dans les directions Y et Z.

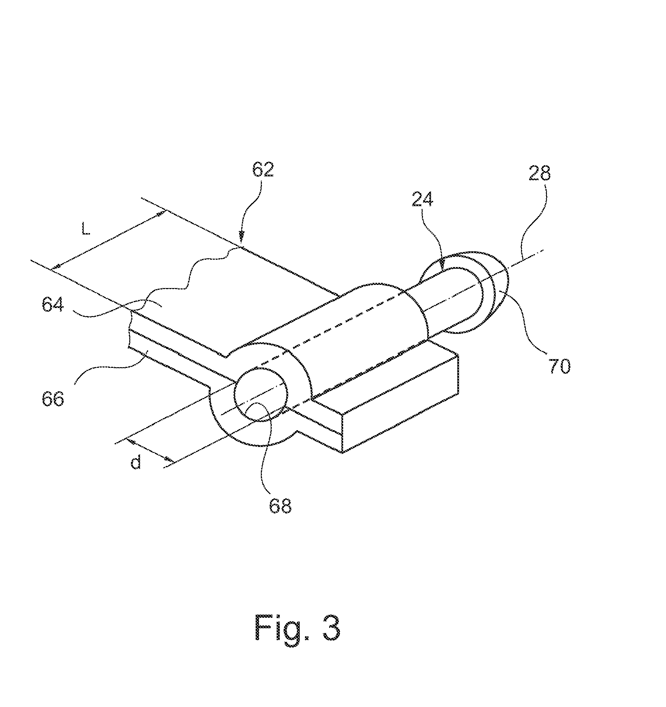

A cet effet, le mécanisme 60 comprend une pince 62 représentée plus en détail sur la figure 3. Cette pince 62 comprend deux mâchoires 64 et 66 déplaçables entre une position fermée (représentée sur la figure 3) et une position ouverte. Dans la position fermée, les mâchoires 64 et 66 définissent un canal rectiligne 68 destiné à recevoir l'extrémité 24. Le canal 68 s'étend dans la direction X. Dans la position ouverte, l'extrémité 24 peut être introduite à l'intérieur du canal 68.

Le diamètre d de ce canal est sensiblement égal au diamètre extérieur de l'extrémité 24. La longueur de ce canal 68 dans la direction X est supérieure ou égale à deux fois le diamètre d. Ainsi, lorsque l'extrémité 24 est reçue à l'intérieur du canal 68, les mâchoires 64, 66 enserrent avec suffisamment de précision cette extrémité pour aligner l'axe 28 sur la direction X.

Sur la figure 3, une partie de l'extrémité 24 logée à l'intérieur du canal 68 a également été représentée. L'extrémité 24 se termine par une olive 70.

Le mécanisme 60 comprend également une articulation permettant de raccorder mécaniquement la pince 62 à la table 52 et un verrou 74. L'articulation permet un déplacement libre de la pince dans les directions Y et Z tout en maintenant l'axe du canal 68 parallèle à la direction X. Par exemple, cette articulation est réalisée à partir de rails s'étendant dans les directions Y et Z. Le verrou 74 permet de bloquer les déplacements de la pince 62 le long des directions Y et Z lorsqu'il est enclenché.

Le dispositif 50 comprend aussi un évaluateur comportant un bâti 80 et un embout déplaçable 82 servant à vérifier la conformité de la position de l'extrémité 24 par rapport à des tolérances prédéterminées. Le bâti 80 est fixé sans aucun degré de liberté sur la table 52. Ce bâti 80 porte des moyens d'évaluation essentiellement constitués par un embout déplaçable 82 identique à l'embout du porte-injecteur 12 sur lequel doit être fixée l'extrémité 24, un mécanisme 84 de déplacement de l'embout 82 en translation dans les directions X, Y et Z et un indicateur 86 du franchissement d'une limite correspondant aux tolérances prédéterminées pour la position de l'extrémité 24. Par exemple, le mécanisme 84 est réalisé à l'aide de rails s'étendant parallèlement aux directions X, Y et Z. L'embout 82 est fileté pour permettre le serrage de l'écrou 32 sur cet embout.

Ici, l'indicateur 86 est réalisé à l'aide de contacteurs électriques 88 et d'une interface homme-machine 90. La fermeture des contacteurs 88 est actionnée par le déplacement de l'embout 82 lorsque celui-ci franchit la limite correspondant aux tolérances prédéterminées. L'interface homme-machine 90 comprend des lampes dont l'allumage est déclenché par l'ouverture ou la fermeture des contacteurs 88. Ainsi, l'état allumé ou éteint des lampes permet de discriminer une position conforme, c'est-à-dire à l'intérieur des tolérances prédéterminées, d'une position non-conforme de l'extrémité 24.

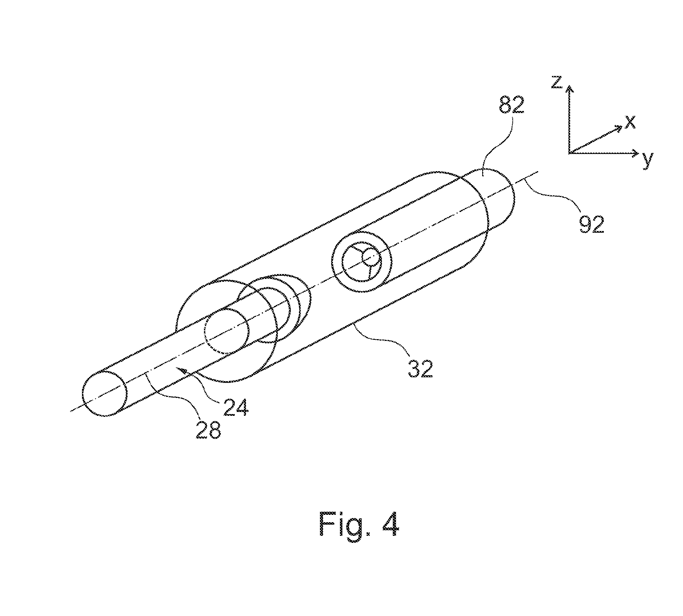

La figure 4 représente plus en détail l'embout 82. Cet embout 82 s'étend le long d'un axe 92 parallèle à la direction X. En effet, le dispositif 50 est décrit ici dans le cas particulier où le raccordement de l'extrémité 24 sur l'embout 82 est possible que si les axes 28 et 92 sont parallèles. Dans le cas contraire, l'écrou 32, dont la présence est représentée par transparence sur la figure 4, ne peut pas s'engrener avec le filetage de l'embout 82.

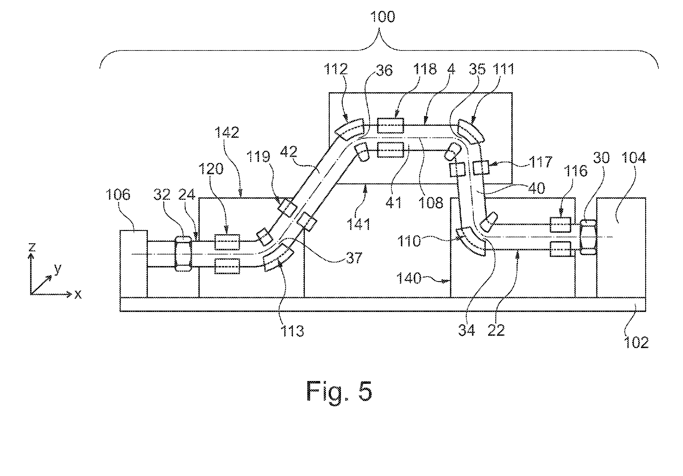

La figure 5 représente un dispositif 100 de contrôle de la longueur développée du tube 4. Ce dispositif 100 comprend également une table support 102 s'étendant parallèlement à un plan défini par les directions X et Y.

Deux mécanismes 104 et 106 de butées sont fixés, sans aucun degré de liberté, sur la table 102. Ces mécanismes 104 et 106 permettent d'immobiliser en translation, respectivement, les extrémités 22 et 24. Par contre, ces mécanismes de butée 104 et 106 permettent une rotation du tube 4 autour des axes 26 et 28 des extrémités.

Le dispositif 10 comprend une succession de gabarits droits et coudés disposés le long d'un parcours idéal 108. Le parcours 108 est confondu avec l'âme d'un tube idéal dont les caractéristiques dimensionnelles sont parfaites. La longueur du parcours 108 est donc égale à la longueur développée souhaitée. Dans la pratique, le tube 4 présente nécessairement des caractéristiques dimensionnelles qui divergent légèrement de celles du tube idéal. Ces différences par rapport au tube idéal se traduisent par le fait que l'âme du tube 4 ne suit pas rigoureusement le parcours 108. Ainsi, la longueur développée du tube 4 peut différer de la longueur du parcours 108. Toutefois, ici, on considère que la longueur développée du tube 4 est acceptable si sa longueur développée est comprise dans une plage prédéfinie de longueurs développées acceptables située autour de la longueur du parcours 108.

Les gabarits disposés le long du parcours 108 permettent chacun de vérifier, localement, que l'âme du tube contrôlé ne s'éloigne pas trop du parcours 108. A cet effet, chacun des gabarits est centré autour du parcours 108. Ici, les dimensions des gabarits sont établies en fonction de la plage prédéfinie de longueurs développées acceptables. Plus précisément, les dimensions des gabarits sont établies pour garantir que si le tube est simultanément reçu dans chacun des gabarits alors sa longueur développée est comprise dans la plage prédéfinie.

De plus, les gabarits sont disposés le long du parcours 108 aux endroits ayant une influence déterminante sur la longueur développée du tube. Par exemple, un gabarit coudé est disposé autour de chaque coude du parcours 108 et un gabarit droit autour de chaque section rectiligne du tube. Ainsi, dans le cas particulier représenté, le dispositif 100 comprend quatre gabarits coudés 110 à 113 disposés, respectivement, autour des coudes 34 à 37. Le dispositif 100 comprend également cinq gabarits droits 116 à 120 disposés, respectivement, autour des sections rectilignes 22, 40, 41, 42 et 24.

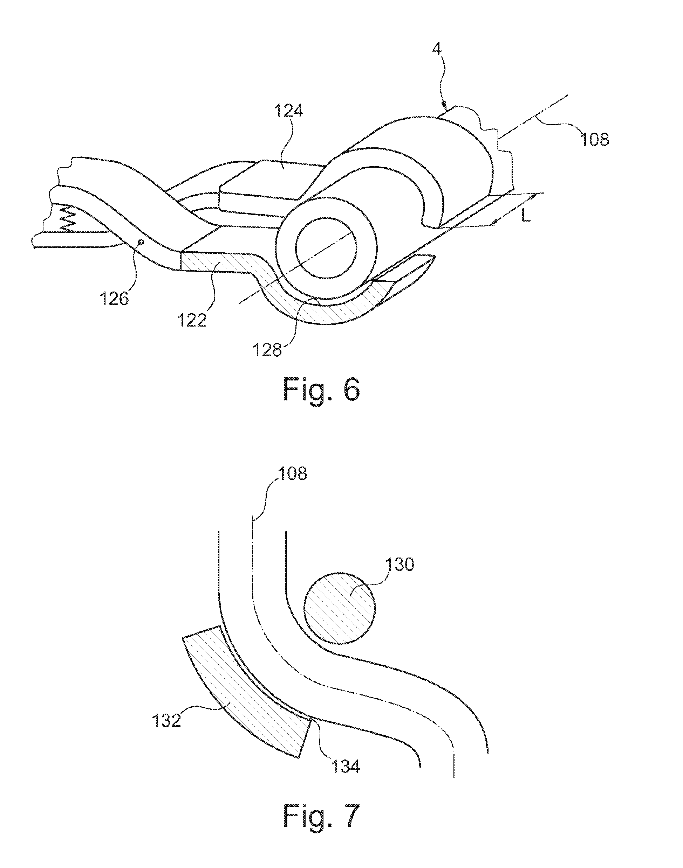

Les gabarits droits sont par exemple tous identiques. Une partie d'un exemple de gabarit droit est représentée plus en détail sur la figure 6. Ce gabarit est formé de deux mâchoires 122 et 124 articulées l'une par rapport à l'autre autour d'un axe 126 de manière à pouvoir se déplacer entre une position fermée (représentée sur la figure 6) et une position ouverte. Dans la position fermée, les mâchoires 122 et 124 enserrent la majeure partie de la périphérie extérieure du tube 4. Plus précisément, dans la position fermée, les mâchoires 122 et 124 définissent un canal 128 destiné à recevoir le tube 4. L'axe de révolution de ce canal 128 est centré sur le parcours 108. Les dimensions de ce canal 128 sont établies de manière à pouvoir recevoir un tube dont l'âme s'éloignerait du parcours 108, au niveau du canal 128, d'un jeu acceptable. Ici le jeu est considéré comme acceptable si cet écart entre l'âme du tube et le parcours 108 n'empêche pas la longueur développée du tube 4 d'être comprise dans la plage prédéfinie de longueurs développées acceptables. Ici, les dimensions du canal se résument à son diamètre intérieur.

Dans la position ouverte, le tube 4 peut être introduit dans le canal 128.

Ici, la longueur du canal 128 dans une direction parallèle au parcours 108 est supérieure ou égale à deux fois le diamètre extérieur du tube 4.

La figure 7 représente en coupe dans un plan parallèle aux directions X, Z un gabarit coudé. Le gabarit coudé est similaire au gabarit droit à l'exception du fait que le canal qu'il définit entre ses mâchoires suit un coude du parcours 108. En particulier, les dimensions de ce canal sont également définies en fonction de la plage prédéfinie de longueurs développées acceptables pour garantir que si le coude du tube 4 peut être reçu à l'intérieur de ce canal, alors la longueur développée du tube 4 est comprise dans la plage prédéfinie de longueurs développées acceptables. Sur la figure 7, les mâchoires portent les références 130 et 132 et le canal porte la référence 134.

Chaque gabarit comprend également un actionneur électrique permettant de déplacer ses mâchoires entre les positions ouverte et fermée en réponse à une commande de l'utilisateur. Sur la figure 5 ces actionneurs sont regroupés dans trois blocs 140 à 142. Ces actionneurs sont standard et ne sont pas décrits plus en détail.

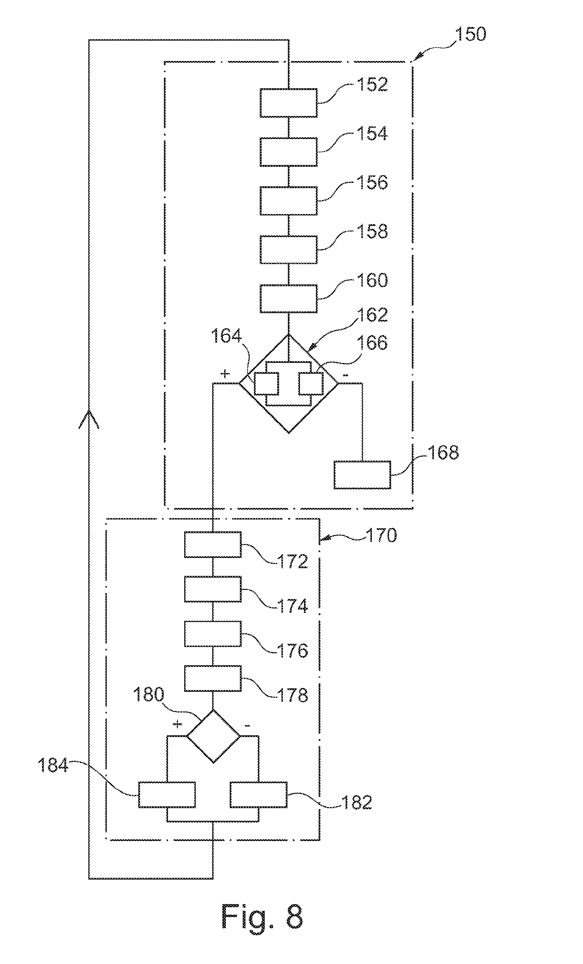

Le contrôle du tube 4 à l'aide des dispositifs 50 et 100 va maintenant être décrit plus en détail en regard de la figure 8.

Initialement, le procédé débute par une phase 150 de contrôle de la position, avant raccordement, de l'extrémité 24 à l'aide du dispositif 50.

Pour cela, lors d'une étape 152, un utilisateur fixe de façon lâche l'extrémité 22 sur le porte-embout 54. Cette fixation lâche permet au tube 4 d'être déplacé en rotation autour de cette extrémité 22. Ici, cette fixation lâche forme une liaison rotule permettant une rotation du tube 4 autour d'un point. Elle est par exemple obtenue en ne serrant que de quelques tours l'écrou 30 sur l'embout 56.

Ensuite, lors d'une étape 154, l'extrémité 24 est mise en place à l'aide du mécanisme 60 de maintien. Plus précisément, lors de l'étape 154, l'extrémité 24 est introduite manuellement dans le canal 68.

Lors d'une étape 156, les mâchoires 64 et 66 sont alors resserrées sur l'extrémité 24 pour maintenir l'axe 28 parallèle à la direction X. Par contre, à ce stade-là, la pince 62 peut librement se déplacer dans les directions Y et Z.

Lors d'une étape 158, l'extrémité 22 est rigidement fixée sur le porte-embout 54. Dès lors, l'extrémité 22 est dans la même situation que celle rencontrée lors d'un montage réel sur la rampe haute pression 10. Ici, la fixation rigide est obtenue en serrant l'écrou 30 sur l'embout 56.

La fixation rigide de l'extrémité 22 entraîne un déplacement de la pince 62 selon les directions Y et Z.

Ensuite, lors d'une étape 160, le mécanisme 60 de maintien est verrouillé en enclenchant le verrou 74. Dès lors, la position de l'extrémité 24 obtenue après l'étape 158 est bloquée. En particulier, toute translation de la pince selon les directions Y ou Z est rendue impossible.

Lors d'une étape 162, on évalue alors la conformité de la position de l'extrémité 24 ainsi obtenue par rapport aux tolérances prédéterminées.

Par exemple, pour réaliser cette évaluation, lors d'une opération 164, l'embout 82 est manuellement déplacé jusqu'à une position de montage de l'extrémité 24 sur cet embout. Dans la position de montage, l'axe 92 de l'embout 82 est confondu avec l'axe 28 de l'extrémité 24. Ensuite, lors de l'opération 164, l'écrou 32 est serré sur l'embout 82. En parallèle, lors d'une opération 166, l'indicateur 86 indique si l'embout 82, lors de son déplacement vers la position de montage, a franchi la limite correspondant aux tolérances prédéterminées.

Par exemple, si lors de ce déplacement, l'embout 82 provoque la fermeture de l'un des contacteurs 88, cela déclenche l'apparition d'une indication sur l'interface homme-machine 90 selon laquelle la position de la seconde extrémité est en dehors des tolérances prédéterminées et donc non-conforme. Par exemple, le contacteur déclenche l'allumage d'une lumière rouge.

Si une indication de non-conformité apparaît alors, lors d'une étape 168, le tube 4 est mis au rebut.

Dans le cas contraire, il est procédé à une phase 170 de contrôle de la longueur développée du tube 4. Initialement, lors d'une étape 172, l'utilisateur commande l'ouverture des mâchoires des gabarits. Ensuite, lors d'une étape 174, il positionne les extrémités 22 et 24 en appui sur les mécanismes de butée 104 et 106 de manière à les immobiliser en translation. Ensuite, par un mouvement de rotation du tube 4 autour des axes des extrémités, lors d'une étape 176, l'utilisateur tente de positionner manuellement et simultanément tous les coudes et toutes les sections rectilignes du tube 4 à l'intérieur des mâchoires.

Ensuite, lors d'une étape 178, l'utilisateur commande la fermeture des mâchoires.

Lors d'une étape 180, une non-conformité du tube est détectée si celui-ci n'est pas parfaitement reçu à l'intérieur des canaux formés par les mâchoires dans leur position fermée. On considère que le tube n'est pas parfaitement reçu à l'intérieur d'un canal si le tube empêche la fermeture complète des mâchoires ou si le tube n'est pas reçu à l'intérieur du canal.

Si une non-conformité est détectée, cela indique que la longueur développée du tube 4 n'est pas comprise dans la plage prédéfinie de longueurs développées acceptables. Dès lors, lors d'une étape 182, le tube est par exemple mis au rebut.

Dans le cas contraire, lors d'une étape 184, le tube est considéré comme conforme aux différentes caractéristiques dimensionnelles imposées et pourra donc être monté ultérieurement à l'intérieur d'un véhicule automobile.

A l'issue de la phase 170, le procédé retourne à la phase 150 pour contrôler un autre tube.

De nombreux autres modes de réalisation sont possibles. Par exemple, l'étape 162 d'évaluation de la conformité de la position de l'extrémité 24 peut être réalisée différemment. Par exemple, l'écart entre la position obtenue de l'extrémité 24 et une position de référence peut être mesuré à l'aide d'une caméra. Si cet écart dépasse une limite prédéterminée, alors le tube 4 est considéré comme n'étant pas conforme.

L'évaluateur de la conformité peut être réalisé en substituant à l'indicateur 86 un mécanisme de restriction des déplacements de l'embout 82. Par exemple, ce mécanisme est réalisé en mettant des butées sur des rails permettant de déplacer l'embout 82 dans les directions X, Y et Z. Si l'embout peut être raccordé à l'extrémité 24 malgré les butées, alors cela signifie que la position de cette extrémité 24 est située à l'intérieur des tolérances prédéterminées. Dans le cas contraire, c'est-à-dire si l'embout 82 ne peut pas être déplacé jusqu'à la position de montage à cause des butées, alors le tube 4 est non conforme.

Un repère visuel peut être utilisé pour indiquer la distance qui sépare la position de référence de la position de l'extrémité 24 obtenue après l'étape 158. Si ce repère visuel est franchi, l'utilisateur met au rebut le tube 4.

Dans le dispositif 100, il n'est pas nécessaire de prévoir un gabarit coudé pour chaque coude du tube. Il n'est pas non plus nécessaire de prévoir un gabarit droit pour chaque section rectiligne du tube. En fait, les gabarits sur les coudes ou les sections rectilignes du tube contrôlé qui n'ont pas une influence déterminante sur la longueur développée de ce tube peuvent être omis.

Ce qui vient d'être décrit s'applique au contrôle d'un tube haute pression mais également à tout autre type de tubes pour lesquels il faut vérifier la position, avant raccordement, de la seconde extrémité ou la longueur développée. Il n'est pas nécessaire que ces tubes soient destinés à être monté dans un véhicule automobile.

Il n'est pas nécessaire de procéder à la fois au contrôle de la position de l'extrémité 24 et au contrôle de la longueur développée du tube. Les phases 150 et 170 peuvent donc être mises en oeuvre indépendamment l'une de l'autre. De même, les dispositifs 50 et 100 peuvent être mis en oeuvre indépendamment l'un de l'autre.

Dans la description qui précède, nous avons décrit le positionnement d'un tube haute-pression sur un porte-injecteur. Pour autant, l'invention n'est pas limitée à ce mode de réalisation, et s'applique également à la vérification de la conformité de tout tube de forme complexe destiné à coopérer avec une interface spécifique.

## Revendications

1. Procédé de contrôle d'un tube présentant une première et une seconde extrémités, la seconde extrémité s'étendant le long d'un axe, **caractérisé en ce que** ce procédé comprend une étape a) de maintien (156) de la seconde extrémité à l'aide d'un mécanisme de maintien imposant une orientation prédéterminée de l'axe de la seconde extrémité permettant le raccordement de la seconde extrémité sur un embout tout en laissant, dans le même temps, la seconde extrémité libre en translation dans au moins une direction perpendiculaire à l'axe de la seconde extrémité, et une étape b) d'évaluation (162) de la conformité, par rapport à des tolérances prédéterminées, de la position de la seconde extrémité lorsque la première extrémité est fixée sur un porte-embout de référence.

2. Procédé selon la revendication 1, dans lequel le procédé comprend:
- avant l'étape a), une étape c) (152) de fixation lâche de la première extrémité au porte-embout de référence de manière à permettre une rotation du tube autour de cette première extrémité, puis
- avant l'étape b), une étape d) (158) de fixation rigide de la première extrémité au porte-embout de référence de manière à placer la première extrémité dans une position identique à celle rencontrée lorsque la première extrémité est raccordée à un embout d'un conduit.

3. Procédé selon la revendication 2, dans lequel, avant l'étape b), le procédé comprend une étape e) (160) de verrouillage, sans aucun degré de liberté, de la seconde extrémité dans la position obtenue après l'étape d).

4. Procédé selon l'une quelconque des revendications précédentes, dans lequel l'étape b) (162) d'évaluation comprend la comparaison de la position obtenue de la seconde extrémité à une limite délimitant, d'un côté, des positions conformes de la seconde extrémité et, de l'autre côté, des positions non-conformes de la seconde extrémité.

5. Procédé selon la revendication 4, dans lequel la comparaison est réalisée :
- en déplaçant (164) un embout le long de ladite direction jusqu'à une position de montage dans laquelle la seconde extrémité est mécaniquement raccordée à cet embout, et
- l'indication (166) d'une non-conformité si l'embout franchit la limite lors de son déplacement vers la position de montage.

6. Dispositif de contrôle d'un tube présentant une première et une seconde extrémités, la seconde extrémité s'étendant le long d'un axe, **caractérisé en ce que** ce dispositif comprend :
- un mécanisme (60) de maintien de la seconde extrémité apte à imposer une orientation prédéterminée de l'axe de la seconde extrémité permettant le raccordement de la seconde extrémité sur un embout tout en laissant, dans le même temps, la seconde extrémité libre en translation dans au moins une direction perpendiculaire à l'axe de la seconde extrémité, et
- un évaluateur (80) de la conformité, par rapport à des tolérances prédéterminées, de la position de la seconde extrémité obtenue lorsque la première extrémité est fixée sur un porte-embout de référence.

7. Dispositif de contrôle selon la revendication 6 **caractérisé en ce qu'**il comporte de plus un ensemble de gabarits (110 à 113 et 116 à 120) pour les parties du tube impactant la longueur développée du tube, ces gabarits (110 à 113 et 116 à 120) étant centrés autour d'un parcours idéal (108) de l'âme du tube correspondant à la longueur développée souhaitée, et les dimensions de chaque gabarit (110 à 113 et 116 à 120) étant telles que les différentes sections contrôlées du tube puissent être simultanément reçues dans tous ces gabarits uniquement si la longueur développée du tube contrôlé est comprise dans la dispersion prévue.

8. Dispositif selon la revendication 7, dans lequel le dispositif comprend au moins un gabarit coudé (110 à 113) pour un coude du tube.

9. Dispositif selon la revendication 7 ou la revendication 8, dans laquelle au moins un gabarit (110 à 113 et 116 à 120) comprend au moins deux mâchoires (122, 124, 130, 132) déplaçables entre une position fermée dans laquelle elles entourent la majeure partie de la périphérie du tube contrôlé, et une position ouverte dans laquelle le tube peut être introduit entre ces mâchoires.

10. Dispositif selon la revendication 9, dans lequel chaque gabarit (110 à 113 et 116 à 120) comprend un actionneur électrique apte à déplacer les mâchoires (122, 124, 130, 132) entre leurs positions fermée et ouverte en réponse à une commande d'un utilisateur.

11. Dispositif selon l'une quelconque des revendications 7 à 10, dans lequel le dispositif comprend des mécanismes (104, 106) de butées aptes à positionner les extrémités du tube dans une position de contrôle dans laquelle le tube contrôlé peut être simultanément reçu dans chacun des gabarits si sa longueur développée est dans la plage prédéfinie.
